# EUROPEAN PATENT APPLICATION

(11) **EP 2 617 965 A2**
(43) Date of publication of application: **24.07.2013**
(21) Application number: 13150504.2
(22) Date of filing: 08.01.2013
(51) Int. Cl.: F02C 7/32

(54) **Gas turbine engine with pylon mounted accessory drive**

(30) Priority: 17.01.2012 US 201213352281
(71) Applicant: United Technologies Corporation, Hartford, CT 06101 (US)
(72) Inventor: Winter, Michael, New Haven, CT 06515 (US)
(74) Representative: Leckey, David Herbert

(57) **Abstract**

A gas turbine engine (10) includes an accessory gearbox (60) within an engine pylon (P). The accessory components (66) may be mounted within the engine pylon (P) to save weight and space within the core nacelle (12) as well as provide a relatively lower temperature operating environment.

## Description

### BACKGROUND OF THE INVENTION

The present invention relates to a gas turbine engine pylon arrangement.

Aircraft powered by gas turbine engines often include a mechanically driven accessory gearbox to drive accessory systems such as fuel pumps, scavenge pumps, electrical generators, hydraulic pumps, etc. The power requirements of the accessory gearbox continue to increase as the number of electrical systems within aircraft increase.

Conventional gas turbine engine accessory gearboxes utilize a separate gearbox case mountable underneath the engine axially near the diffuser case. The accessory gearbox is driven by an angle gearbox axially forward of the accessory gearbox through a layshaft. The angle gearbox is driven by a towershaft driven by the high-pressure spool.

Although effective, one disadvantage of this conventional arrangement is the utilization of a relatively significant amount of space within the engine core nacelle as well as the multiple shaft and gearbox arrangement required to transfer power from the towershaft to the independent accessory gearbox. To accommodate these design conditions, the nacelle design may provide less than optimal performance at cruise conditions.

Accordingly, it is desirable to provide an accessory gearbox for a gas turbine engine which provides power to larger generators than conventional engines, yet facilitates nacelle packaging.

### SUMMARY OF THE INVENTION

An engine pylon assembly for a gas turbine engine according to an exemplary aspect of the present disclosure comprises a core nacelle defined about an engine centerline axis, a fan nacelle mounted at least partially around said core nacelle to define a fan bypass flow path for a fan bypass airflow, an engine pylon to support said core nacelle and said fan nacelle, and an accessory gearbox mounted within said engine pylon axially aft of said fan nacelle.

In a further non-limiting embodiment the accessory gearbox may be mounted axially forward of exhaust gas generated by an engine within the core nacelle.

In a further non-limiting embodiment of either of the foregoing assembly embodiments, the assembly may comprise a fan variable area nozzle movable to vary a fan nozzle exit area during engine operation.

In a further non-limiting embodiment of any of the foregoing assembly embodiments, the fan variable area nozzle may be configured to adjust a pressure ratio of the fan bypass airflow during engine operation.

In a further non-limiting embodiment of any of the foregoing assembly embodiments, the assembly may comprise a gear train driven by a core engine within the core nacelle to drive a fan within the fan nacelle, the gear train defining a gear reduction ratio of greater than or equal to about 2.3. Additionally or alternatively, the assembly may comprise a gear train driven by a core engine within the core nacelle to drive a fan within the fan nacelle, the gear train defining a gear reduction ratio of greater than or equal to about 2.5. Additionally or alternatively, the assembly may comprise a gear train driven by a core engine within the core nacelle to drive a fan within the fan nacelle, the gear train defining a gear reduction ratio of greater than or equal to 2.5.

In a further non-limiting embodiment of any of the foregoing assembly embodiments, the core engine may include a low pressure turbine which defines a pressure ratio that is greater than about five (5). Additionally or alternatively, the core engine may include a low pressure turbine which defines a pressure ratio that is greater than five (5).

In a further non-limiting embodiment of any of the foregoing assembly embodiments, the bypass flow may define a bypass ratio greater than about six (6). Additionally or alternatively, the bypass flow may define a bypass ratio greater than about ten (10). Additionally or alternatively, the bypass flow may define a bypass ratio greater than ten (10).

In a further non-limiting embodiment of any of the foregoing assembly embodiments, the accessory gearbox may include a geartrain.

In a further non-limiting embodiment of any of the foregoing assembly embodiments, the assembly may comprise at least one towershaft which extends from the accessory gearbox through the engine pylon.

In a further non-limiting embodiment of any of the foregoing assembly embodiments, the accessory gearbox may be mounted adjacent to a wing. Additionally or alternatively, the accessory gearbox may be mounted below a wing.

A gas turbine engine according to an exemplary aspect of the present disclosure comprises a core nacelle defined about an engine centerline axis, a fan nacelle mounted at least partially around the core nacelle to define a fan bypass flow path for a fan bypass airflow, an engine pylon to support the core nacelle and the fan nacelle, and a towershaft driven by a spool of an engine within the core nacelle, and an accessory gearbox at least partially mounted within the engine pylon axially aft of the fan nacelle, the accessory gearbox driven by the towershaft.

In a further non-limiting embodiment of any of the foregoing gas turbine engine embodiment, the accessory gearbox may power a multiple of accessory components.

In a further non-limiting embodiment of either of the foregoing gas turbine engine embodiments, the accessory gearbox may be mounted adjacent to a wing. Additionally or alternatively, the accessory gearbox may be mounted below a wing.

In a further non-limiting embodiment of any of the foregoing gas turbine engine embodiments, the fan variable area nozzle may be movable to vary a fan nozzle exit area during engine operation.

In a further non-limiting embodiment of any of the foregoing gas turbine engine embodiments, the fan variable area nozzle may be configured to adjust a pressure ratio of the fan bypass airflow during engine operation.

In a further non-limiting embodiment of any of the foregoing gas turbine engine embodiments, the spool may be a low pressure spool. Additionally or alternatively, the spool may be a high pressure spool.

In a further non-limiting embodiment of any of the foregoing gas turbine engine embodiments, the accessory gearbox may be mounted axially forward of exhaust gas generated by the engine.

### BRIEF DESCRIPTION OF THE DRAWINGS

The various features and advantages of this invention will become apparent to those skilled in the art from the following detailed description of the currently disclosed embodiment. The drawings that accompany the detailed description can be briefly described as follows:
Figure 1 is a general schematic sectional view through a gas turbine engine along the engine longitudinal axis; and
Figure 2 is a general schematic view of pylon located accessory systems.

### DETAILED DESCRIPTION OF THE DISCLOSED EMBODIMENT

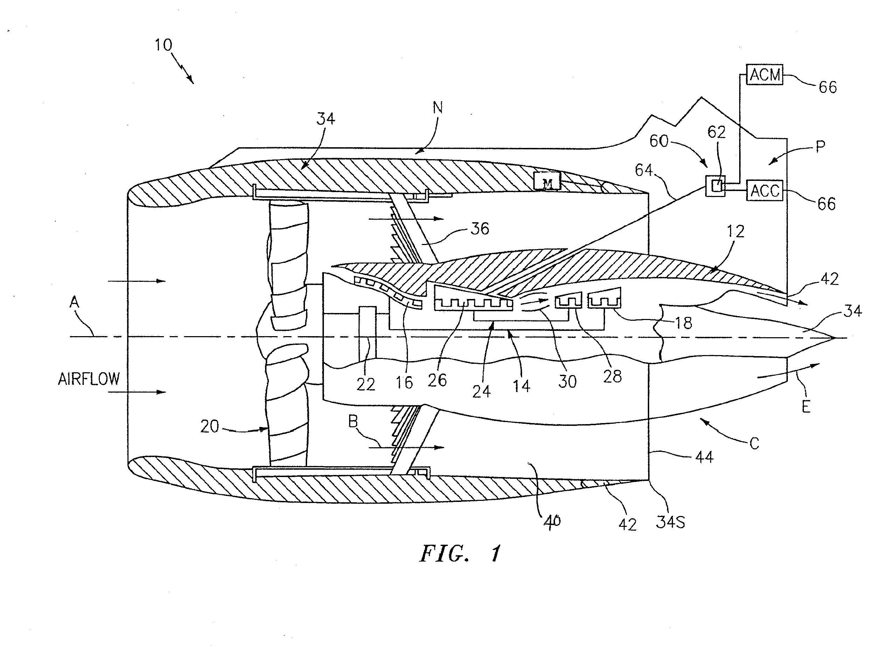

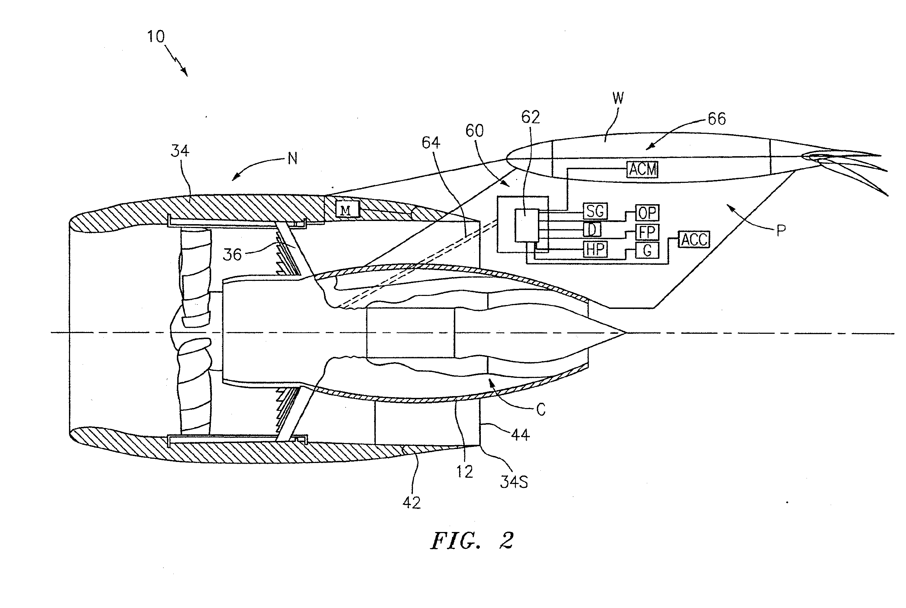

Figure 1 illustrates a general partial fragmentary schematic view of a gas turbine engine 10 suspended from an engine pylon P within an engine nacelle assembly N as is typical of an aircraft designed for subsonic operation. The engine pylon P or other support structure is typically mounted to an aircraft wing W (Figure 2), however, the engine pylon P may alternatively extend from other aircraft structure such as an aircraft empennage.

The turbofan engine 10 includes a core engine C within a core nacelle 12 that houses a low spool 14 and high spool 24. The low spool 14 includes a low pressure compressor 16 and low pressure turbine 18. The low spool 14 may drive a fan section 20 through a gear train 22. The high spool 24 includes a high pressure compressor 26 and high pressure turbine 28. A combustor 30 is arranged between the high pressure compressor 26 and high pressure turbine 28. The low and high spools 14, 24 rotate about an engine axis of rotation A.

The engine 10 in the disclosed embodiment is a high-bypass geared architecture aircraft engine. In one disclosed, non-limiting embodiment, the engine 10 bypass ratio is greater than about six (6) to ten (10), the gear train 22 is an epicyclic gear train such as a planetary gear system or other gear system with a gear reduction ratio of greater than about 2.3 and the low pressure turbine 18 has a pressure ratio that is greater than about 5. In one disclosed embodiment, the engine 10 bypass ratio is greater than ten (10:1), the turbofan diameter is significantly larger than that of the low pressure compressor 16, and the low pressure turbine 18 has a pressure ratio that is greater than 5:1. The gear train 22 may be an epicycle gear train such as a planetary gear system or other gear system with a gear reduction ratio of greater than 2.5:1. It should be understood, however, that the above parameters are only exemplary of one embodiment of a geared architecture engine and that the present invention is applicable to other gas turbine engines including direct drive turbofans.

Airflow enters a fan nacelle 34, which at least partially surrounds the core nacelle 12. The fan section 20 communicates airflow into the core nacelle 12 to power the low pressure compressor 16 and the high pressure compressor 26. Core airflow compressed by the low pressure compressor 16 and the high pressure compressor 26 is mixed with the fuel in the combustor 30 and expanded over the high pressure turbine 28 and low pressure turbine 18. The turbines 28, 18 are coupled for rotation with respective spools 24, 14 to rotationally drive the compressors 26, 16 and, through the optional gear train 22, the fan section 20 in response to the expansion. A core engine exhaust E exits the core nacelle 12 through a core nozzle 42 defined between the core nacelle 12 and a tail cone 32.

The core nacelle 12 is at least partially supported within the fan nacelle 34 by structure 36 often generically referred to as Fan Exit Guide Vanes (FEGVs), upper bifurcations, lower bifurcations or such like. A bypass flow path 40 is defined between the core nacelle 12 and the fan nacelle 34. The engine 10 generates a high bypass flow arrangement with a bypass ratio in which approximately 80 percent of the airflow entering the fan nacelle 34 becomes bypass flow B. The bypass flow B communicates through the generally annular bypass flow path 40.

The engine 10 generates a high bypass flow arrangement with a bypass ratio in which approximately 80 percent of the airflow entering the fan nacelle 34 becomes bypass flow B. The bypass flow B communicates through the generally annular fan bypass flow path 40 and is discharged from the engine 10 through a fan variable area nozzle (VAFN) 42 which defines a fan nozzle exit area 44 between the fan nacelle 34 and the core nacelle 12 at a fan nacelle end segment 34S of the fan nacelle 34 downstream of the fan section 20.

Thrust is a function of density, velocity, and area. One or more of these parameters can be manipulated to vary the amount and direction of thrust provided by the bypass flow B. The VAFN 42 operates to effectively vary the area of the fan nozzle exit area 44 to selectively adjust the pressure ratio of the bypass flow B in response to a controller M. Low pressure ratio turbofans are desirable for their high propulsive efficiency. However, low pressure ratio fans may be inherently susceptible to fan stability/flutter problems at low power and low flight speeds. The VAFN allows the engine to change to a more favorable fan operating line at low power, avoiding the instability region, and still provide the relatively smaller nozzle area necessary to obtain a high-efficiency fan operating line at cruise.

A significant amount of thrust is provided by the bypass flow B due to the high bypass ratio. The fan section 20 of the engine 10 is preferably designed for a particular flight condition -- typically cruise at about 0.8M and about 35,000 feet (10668 m). As the fan blades within the fan section 20 are efficiently designed at a particular fixed stagger angle for an efficient cruise condition, the VAFN 42 is operated to effectively vary the fan nozzle exit area 44 to adjust fan bypass air flow such that the angle of attack or incidence on the fan blades is maintained close to the design incidence for efficient engine operation at other flight conditions, such as landing and takeoff to thus provide optimized engine operation over a range of flight conditions with respect to performance and other operational parameters such as noise levels.

An accessory gearbox 60 mounted within the engine pylon P includes a geartrain 62 driven by at least one towershaft arrangement 64 which takes power off of the core engine C. The towershaft arrangement 64 extends through either or both the core nacelle 12 and the fan nacelle 34 into the engine pylon P. The towershaft arrangement 64 may include a single towershaft which is in meshed engagement with either of the low spool 14 or the high spool 24. Alternatively, the towershaft arrangement 64 may include two towershafts, one of each in meshed engagement with the respective low spool 14 and the high spool 24.

The accessory gearbox 60 supports the geartrain 62 to facilitate direct drive of at least one accessory component 66 and therefore provide a more optimized core nacelle 12. The geartrain 62 drives each auxiliary engine component at the proper speed. The geartrain 62 provides power to pumps, electrical generators and various other systems. The accessory components 66 may be mounted within the engine pylon P and include components such as a starter/generator SG, a deoiler D, a hydraulic pump HP, an oil pump OP, a fuel pump FP, a generator G and such like (Figure 2) which thereby saves weight and space within the core nacelle 12. Location of the accessory components 66 within the pylon also provides a relatively lower temperature environment to thereby increase geartrain 62 and accessory component life.

It should be understood that any number and type of accessory components 66 are usable with the present invention. Furthermore, accessory components may alternatively, or in addition, be located in other areas such as in the wing W, core nacelle, fuselage, etc. Optimization of the core nacelle 12 increases the overall propulsion system efficiency to thereby, for example, compensate for the additional weight of the extended length towershaft. This arrangement also frees up additional space within the core nacelle below the engine case structure for other externals and accessory components.

It should be understood that relative positional terms such as "forward," "aft," "upper," "lower," "above," "below," and the like are with reference to the normal operational attitude of the vehicle and should not be considered otherwise limiting.

The foregoing description is exemplary rather than defined by the limitations within. Many modifications and variations of the present invention are possible in light of the above teachings. The disclosed embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. An engine pylon assembly for a gas turbine engine comprising:
a core nacelle (12) defined about an engine centerline axis (A);
a fan nacelle (34) mounted at least partially around said core nacelle (12) to define a fan bypass flow path (40) for a fan bypass airflow (B);
an engine pylon (P) to support said core nacelle (12) and said fan nacelle (34); and
an accessory gearbox (60) mounted at least partially within said engine pylon (P) axially aft of said fan nacelle (34).

2. The assembly of claim 1, wherein said accessory gearbox (60) is mounted within said pylon (P).

3. The assembly as recited in claim 1 or 2, wherein the accessory gearbox (60) is mounted axially forward of exhaust gas generated by an engine within the core nacelle (12).

4. The assembly as recited in claim 1, 2 or 3, further comprising a fan variable area nozzle (42) movable to vary a fan nozzle exit area during engine operation, the fan variable area nozzle (42) optionally being configured to adjust a pressure ratio of the fan bypass airflow (B) during engine operation.

5. The assembly as recited in any preceding claim, further comprising a gear train (22) driven by a core engine (C) within said core nacelle (12) to drive a fan (20) within said fan nacelle (34), said gear train (22) defines a gear reduction ratio of greater than or equal to about 2.3, for example greater than or equal to about 2.5, for example greater than or equal to 2.5.

6. The assembly as recited in any preceding claim, wherein a core engine (C) within said core nacelle (12) includes a low pressure turbine (18) which defines a pressure ratio that is greater than about five (5), for example greater than five (5).

7. The assembly as recited in any preceding claim, wherein said bypass flow (B) defines a bypass ratio greater than about six (6), for example greater than about ten (10), for example greater than ten (10).

8. The assembly as recited in any preceding claim, wherein said accessory gearbox (60) includes a geartrain (62).

9. The assembly as recited in any preceding claim, further comprising at least one towershaft (64) which extends from said accessory gearbox (60) through said engine pylon (P).

10. The assembly as recited in any preceding claim, wherein said accessory gearbox (60) is mounted adjacent to a wing (W).

11. The assembly as recited in any preceding claim, wherein said accessory gearbox (60) is mounted below a wing (W).

12. The assembly as recited in any preceding claim, wherein said accessory gearbox (60) powers a multiple of accessory components.

13. A gas turbine engine system comprising an assembly as recited in any preceding claim;
a towershaft (64) driven by a spool (14, 24) of an engine within said core nacelle (12); and
said accessory gearbox (60) driven by said towershaft (64).

14. The gas turbine engine as recited in claim 13, wherein the spool is a low pressure spool (14).

15. The gas turbine engine as recited in claim 13, wherein the spool is a high pressure spool (24).
